# EUROPEAN PATENT APPLICATION

(11) **EP 1 406 402 A2**
(43) Date of publication of application: **07.04.2004**
(21) Application number: 03255754.8
(22) Date of filing: 15.09.2003
(51) Int. Cl.: H04H 1/00, H04L 27/26

(54) **Improved digital broadcast receiver**

(30) Priority: 13.09.2002 GB 2212967
(71) Applicant: BRITISH BROADCASTING CORPORATION, London W1A 1AA (GB); LSI LOGIC CORPORATION, Milpitas, CA 95035 (US)
(72) Inventor: Nokes, Christopher Ryan, Surrey - RH3 7EH (GB); Stott, Jonathan Highton, Surrey, RH6 9AR (GB); Mitchell, Justin David, Crawley - RH10 7ZH (GB); Chen, Ting-Yin, San Jose - CA 95127 (US); Zheng, Yuan, Newark, CA 94560 (US)
(74) Representative: Abnett, Richard Charles

(57) **Abstract**

A digital broadcast receiver is described in which detection of digital channels, and detection of the transmission mode of such a digital channel, can be achieved in the optimum time. The receiver employs a number of preliminary checks which screen out channels that are not appropriate for digital decoding before the channels are made available to a digital signal search circuit. These checks include determining whether the signal in the channel is an analogue or a digital signal, as well as determining whether the magnitude of the signal in the channel is sufficient for it to be decoded.

The search circuit (30) performs digital decoding on the channels which are deemed appropriate, and preferably searches in parallel for all possible transmission modes simultaneously. As a result of these measures, a significant improvement in the time taken to detect digital signals and tune to them is achieved.

## Description

### Background of the Invention

This invention relates to an improved digital broadcast receiver, and to an improved reception method for use in a digital broadcast receiver.

In the United Kingdom, analogue and digital television signals are transmitted at UHF frequencies from 470 MHz to 862 MHz. There are 49 channels in total, called channel 21 to channel 69, and each of these channels is 8 MHz wide. In each channel, a given television transmitter will either transmit a digital television signal, an analogue television signal, or nothing. In the area between two different transmitters, a set-top box may receive a digital signal, an analogue signal, a co-channel analogue and digital signal (from different transmitters), or nothing.

When a digital terrestrial television receiver is first used (or moved to a new location), it does not know which channels are available to it. It must therefore look through all 49 channels and determine which of the digital channels it is possible for it to decode and present to the user.

The current generation of set-top boxes typically takes several minutes (even up to 25 minutes) to scan the entire UHF band. The present invention relates to a receiver in which the period required for this scan to take place is reduced.

### Summary of the Invention

The invention in its various aspects is defined by the independent claims below to which reference should now be made. Advantageous features are set forth in the appendant claims.

The invention provides an improved digital television receiver and an improved digital television reception method. In the digital broadcast receiver the detection of digital channels, and detection of the transmission mode of such a digital channel, can be achieved in optimum time. The receiver employs a number of preliminary checks which screen out channels that are not appropriate for digital decoding before the channels are made available to a digital signal search circuit. These checks include determining whether the signal in the channel is an analogue or a digital signal, as well as determining whether the magnitude of the signal in the channel is sufficient for it to be decoded.

The search circuit performs digital decoding on the channels which are deemed appropriate, and preferably searches in parallel for all possible transmission modes simultaneously. As a result of these measures, a significant improvement in the time taken to detect digital signals and tune to them is achieved.

The invention also provides techniques for quickly detecting the mode of transmission of the digital signal, and for determining any offset of the signal within the channel.

### Brief Description of the drawings

The invention will now be described in more detail, by way of example, and with reference to the drawings in which:
Figure 1 is a block diagram illustrating the relevant part of a known digital television receiver;
Figure 2 is a block diagram illustrating the relevant part of a digital terrestrial television receiver according to the preferred embodiment of the invention;
Figure 3 is a block diagram illustrating a known AGC circuit;
Figure 4 is a flow chart illustrating part of the method according to the preferred embodiment of the invention;
Figure 5 is a flow chart illustrating in more detail part of the method of Figure 4;
Figure 6 is a plot showing the power spectrum of a channel containing an analogue television signal;
Figure 7 is a graph showing the power spectrum of a channel containing a co-channel analogue television signal and digital television signal;
Figure 8 is a flow chart illustrating the continuance of the method set out in Figure 4;
Figure 9 is a schematic illustration of the input and output to the correlator circuit of Figure 2, when no analogue signal is present;
Figure 10 is a schematic illustration of the output of the correlator when there is some analogue signal or continuous or carrier wave (CW) signal present;
Figure 11 is a graph illustrating the amount of DC bias detected given different ratios of digital to analogue signal present in the channel;
Figure 12 is a block diagram illustrating the split correlator circuit according to the preferred embodiment of the invention;
Figure 13 is a block diagram illustrating a single parallel search block used to detect the transmission mode of the digital signal according to the preferred embodiment of the invention;
Figure 14 illustrates the input to the parallel search circuit comprising the signal output from the correlator and two square wave accumulator signals;
Figure 15 is a graph showing of the output of all of the parallel search circuits and showing a lock with a particular transmission mode;
Figure 16 is a graph indicating the effect on the output of the parallel search circuit if the frequency is not held constant during the parallel search process; and
Figure 17 is a block diagram illustrating the relevant part of an AFC circuit.

### Detailed Description of the Preferred Embodiments

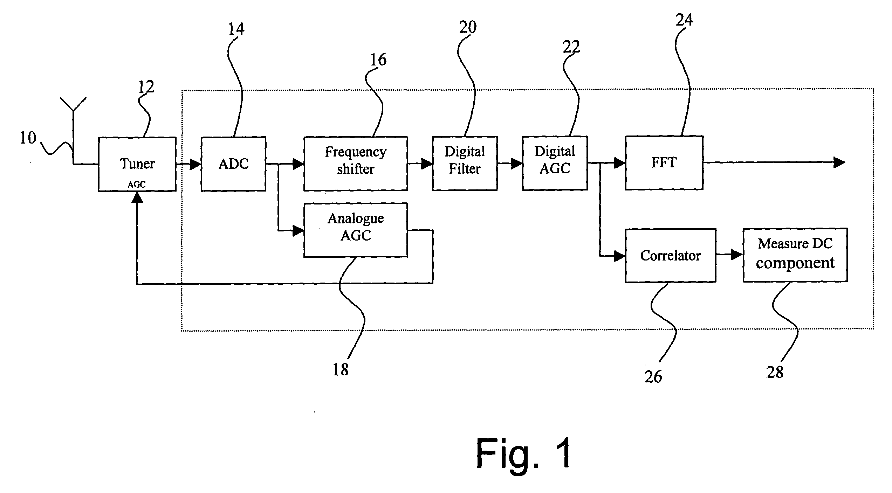

In order to understand the operation of the preferred embodiment of digital receiver, a known receiver will first be briefly described by way of example with reference to Figure 1. Purely by way of example a receiver operating on channels 21 to 69 in the UHF band will be described.

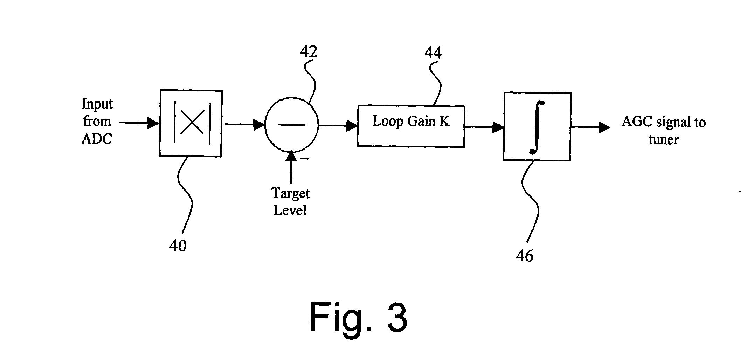

Figure 1 shows the first part of a known receiver 2 for use in DVB-T (Digital Video Broadcast - Terrestrial) systems, up to and including the Fourier Transform (FFT) block for decoding the received signal. A DVB-T receiver is described in more detail in European Patent Application EP-A-1 221 793. The receiver comprises an antenna 10 coupled to a tuner 12. The tuner takes a received signal from the UHF (or VHF) frequencies used for transmission, frequency shifts it to a lower frequency, and filters it. Common choices for the lower frequency are 4.57MHz and 36.1667MHz. This signal is then passed to an Analogue to Digital Converter (ADC) 14 where it is sampled. The output from the ADC is passed to both a frequency shifter 16 and a measure-signal-level circuit comprising an analogue Automatic Gain Control (AGC) circuit 18. This is shown in more detail in Figure 3 described later.

The output of the frequency shifter 16 is an 8 MHz wide signal centred on 0 Hz represented as a complex or IQ signal. This signal is then passed to a digital IIR (infinite impulse response) filter 20, though an FIR (finite impulse response) filter can be used. This filter has variable taps that can be used to adjust the pass-band of the digital filter. The main purpose of this filter is to remove the image after down-conversion, although the filter is also useful in both determining the presence of analogue television signals and in helping the subsequent digital AGC to avoid seeing the power of adjacent channel signals. One of the problems with the digital IIR filter 20 is that it tends to reduce the signal level. This problem is solved by having a digital AGC circuit 22 that measures the power of the signal and increases the power of the signal to a known level. The output of the digital AGC circuit is then passed to the FFT block 24 for further COFDM demodulation. The FFT block converts the digital signal from the time domain back to the frequency domain.

At the output of the digital AGC 22, the signal is also sent to a correlator 26. The correlator is part of a circuit used in the pre-FFT time synchronisation algorithm in the receiver; the output of the correlator gives a signal that can be used as a timing signal. The output of the correlator is then passed to a "Measure DC component" circuit 28 which is included in existing pre-FFT time synchronisation circuitry.

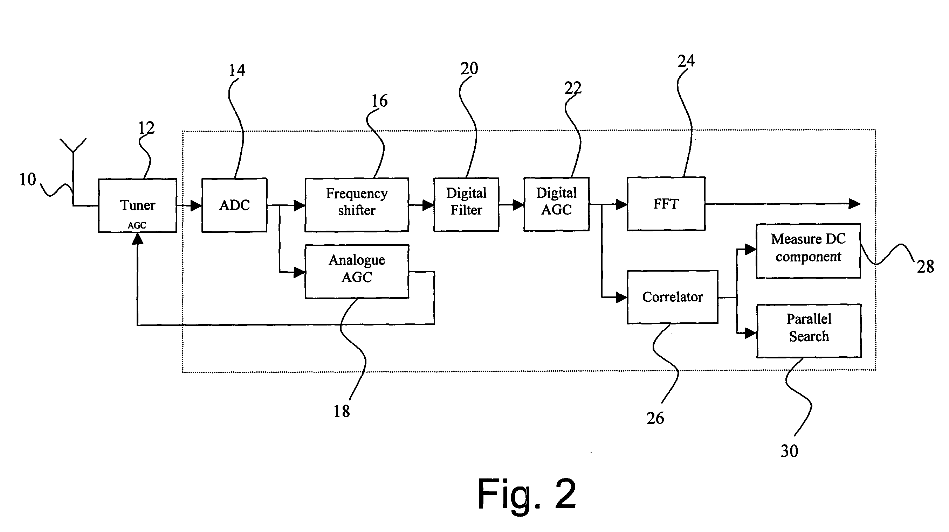

Figure 2 shows a digital television receiver according to the preferred embodiment of the invention. The addition to the receiver shown in Figure 1 is a parallel search circuit 30 which is also connected to the output of the correlator 26. There are in fact two outputs from the correlator 26 connected to the parallel search circuit 30; the correlation is done with two different delays at the same time. The parallel search circuit 30 is used to find the FFT size and guard interval of the transmission mode by searching for all the possible transmission modes in parallel.

The preferred receiver also makes use of the AGC circuit 18 in order to perform a quicker search. The measure-signal-level circuit or AGC circuit shown in Figure 3 is based on a simple integrator loop circuit. It comprises an input stage 40 which determines the magnitude of the power of the received signal and compares this, by means of subtractor (or adder) 42, to a desired target power level. The result of the comparison, that is the difference between the target power level and the determined power level, forms an error signal, which is multiplied (or divided, as appropriate) by the loop gain K 44, which then forms the input to an integrator 46. The output of this integrator is the AGC signal that is fed back to the tuner 12 to provide control of the output level of the tuner in the manner of a well-known AGC control loop.

In the preferred embodiment of the receiver, the value on the integrator 46 is read by an additional circuit element (not shown). This value can be used to tell how much signal power is present in the channel being considered.

To scan the reception band and find which channels carrying a digital signal can be received, the preferred DVB-T receiver embodying the invention operates in the manner set out in step form below.
1. Tune to the next channel to scan (in the range channel 21 to channel 69);
2. Look at the analogue and digital AGC (automatic gain control) levels to determine if there is any signal present in that channel;
3. Determine if the signal is analogue or has too high a level of analogue to prevent digital reception;
4. Eliminate unwanted channels;
5. Determine the FFT (fast Fourier transform) size and guard interval;
6. Determine if the channel has a 1/6 MHz frequency offset;
7. Determine the constellation type, code rate and constellation hierarchy;
8. Read the MPEG system information to determine the service name;
9. Optimise the channel parameters to provide the most reliable reception;
10. Determine if the adjacent channel NICAM rejection filter is required;
11. Store the information for this channel; and repeat until all 49 channels have been scanned.

Many of these steps are performed by utilizing the existing components in known receiver systems. Step 5 in particular however requires the presence of additional dedicated circuitry provided as part of the preferred embodiment. Many of the other steps can be implemented by making minor modifications to the existing components in the receiver.

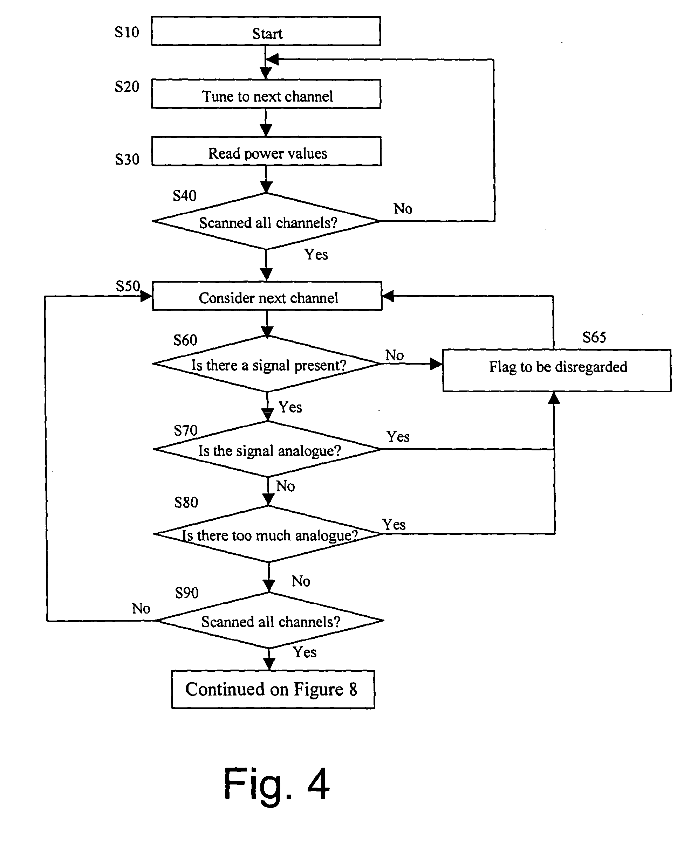

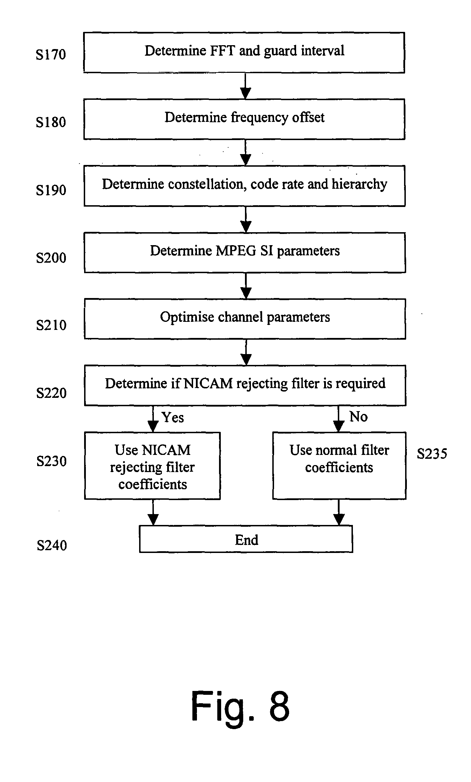

The steps outlined above form the mode detection and tuning algorithm of the preferred receiver. They are illustrated in Figures 4 and 8, and will now be described in detail.

Referring to Figure 4, the start S10 of the scanning algorithm is preferably initiated once the digital set top box is connected to a television receiver and is connected to a power supply. It may also be initiated by the operation of a button on the set top box or on a remote control unit for example.

The first stage in the scanning algorithm, shown as step S20, is to tune the tuner to the first or next frequency to be examined. This may be done by issuing appropriate I²C (or 3-wire protocol) commands to the tuner. The I²C tuner programming sequence is typically 5 bytes long. In the I²C protocol, this requires 47 cycles (1 start, 5 bytes, 5 acknowledges and 1 stop) of the I²C clock which has a maximum clock frequency of 100 KHz. So the programming time is approximately 470µs for each channel, or 23ms for all 49 UHF channels. This is negligible compared to overall processing time.

The tuner does, however, have a settling time. This is the time required once the I²C programming sequence has been sent for the tuner to stabilise on the requested frequency. For one example of an Alps tuner, part no: TDED4X506A, this is specified as the first local oscillator lock time (lock to ±5 KHz) which is specified as having a maximum of 50ms. So the settling time for all 49 channels will be 2.45 seconds at most. This is significant because, to achieve the aim of scanning all the channels in the UHF band in, say, under 5 seconds, then 2.5 seconds of this time will be used up in waiting for the tuner to tune to and stabilise on the requested channel.

Once a channel has been tuned to, the power values for that channel as detected by both the analogue and digital AGC circuits shown in Figure 2 are determined. The frequency band-pass of the digital filter 20 is adjusted, and the frequency shifter 16 is operated so that readings of the power from different parts of the received signal in each channel can be taken from the digital AGC. This will be described in more detail later. Scanning the power values of each channel takes a negligible amount of time, once the receiver has been tuned to a channel, so it is preferred if the power values for all of the channels are read in one pass. This is illustrated by steps S30 and S40 in Figure 4, which loop through each of the channels in turn until each channel has been examined. Control then passes to step S50 where the power values determined and recorded for each channel are examined to make a decision about the channel contents.

Using the power values, the preferred receiver determines for each channel in turn if there is a signal present in the channel (step S60), if the signal is an analogue television signal (step S70), and whether there is too much analogue signal present (step S80) in the channel for the digital signal to be decoded. If any of these checks indicate that a digital signal cannot be obtained from the channel, control flows to step S65 where the channel is flagged so that it is disregarded in later operations of the receiver. This means that further processing time is not spent unnecessarily on channels that do not contain signals of interest.

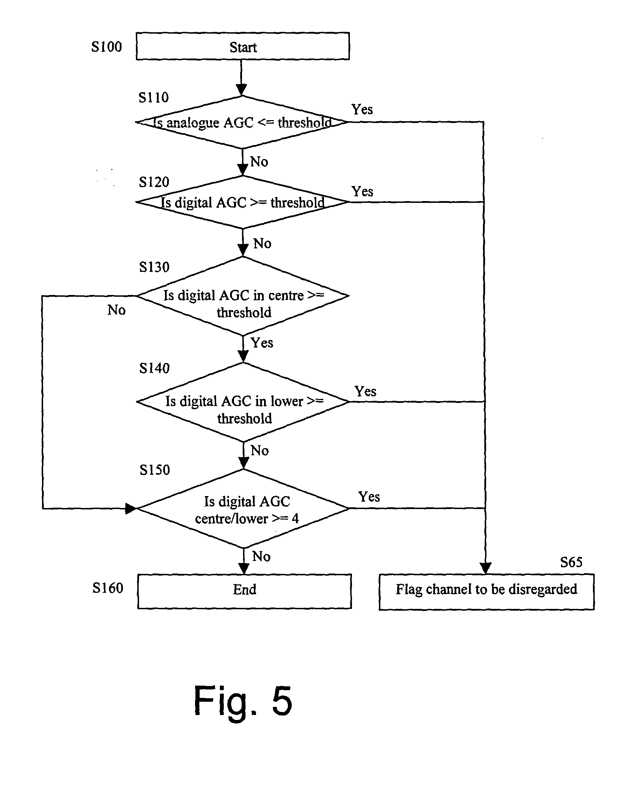

The operations illustrated in steps S60, S70 and S80 are repeated for each channel until it is determined in step S90 that all channels have been considered. At this stage, the receiver will have identified from the 49 available channels, which channels contain digital signals. Control then passes to step S170 (Figure 8), which marks the start of a number of steps specifically addressed at determining the properties of the digital signals identified. Before these later steps are discussed, the way in which steps S60, S70 and S80 are implemented will be discussed in detail with reference to Figure 5.

Figure 5 illustrates the process used in the preferred receiver to analyse the power values recorded for each channel and determine whether the channel contains a digital signal. This process is repeated for each channel.

To determine if a signal is present, the digital filter 20, the analogue AGC circuit 18 and the digital AGC circuit 22 shown in Figure 2 are employed as follows.

The "measure-signal-level" circuit or analogue AGC 18 calculates the AGC control signal that adjusts the level of the tuner output. This is the analogue AGC loop that is part of the normal COFDM demodulation process shown in Figure 3. As described earlier, the preferred embodiment comprises an additional circuit block for reading the value of the loop integrator 46. This gives an indication of the total received power in the current channel. For example in the Alps tuner, a low received signal power is indicated by a control signal with a low or minimum value number (e.g. zero) and a high received signal power is indicated by a high or maximum value number (e.g. 255).

An analogue AGC threshold is chosen, called T_{analogue} say. With the Alps tuner, a value of around 10 (out of 255) has been found to be preferable, though the threshold varies depending on the particular tuner used. In the preferred embodiment values in the range 0 to 20 were found to be acceptable in practice.

Next, a digital AGC threshold is chosen, called T_{digital}. In the preferred implementation, the digital AGC has a different polarity from the analogue AGC. In the digital AGC, a low received signal power is indicated by a high or maximum value number (e.g. 255) and a high received signal power is indicated by a low or minimum value number (e.g. 0). It has been determined for the preferred embodiment that the digital threshold may be in the range 80 to 110, with a value of 104 being chosen in practice. This is twice the maximum value of 52, obtained when the receiver is locked to a received COFDM signal. The value will need to be adjusted for different digital filter shapes and dc gains, and also for different transmission modes, that is different constellation and different code rate.

In step S30 of the process illustrated in Figure 4, the power value P_{analogue} of the analogue AGC power level is read for each channel. In step S110 of Figure 5, the value for the current channel is compared with the pre-determined analogue AGC threshold. If P_{analogue} ≤ T_{analogue}, that is the analogue AGC power level is less than or equal to the analogue AGC threshold, then the signal is deemed not to be strong enough. The channel might be empty or the signal in the channel might be severely attenuated. Control flows from step S110 to S65 where the channel is flagged to be disregarded in later operations.

If the power level is greater than the pre-determined AGC threshold, then control passes to step S120.

There are conditions in which the background noise in the channels presents a noise power of sufficient strength to lie above the threshold for detection. In order to compensate for this, it is preferred if the analogue detection threshold is set with reference to the background noise power. For example, if the sweep through each of the channels reveals that the minimum background noise power alone gives an indication of 10 in the analogue AGC, the threshold of 10 for T_{analogue} will not allow those channels containing signals to be distinguished from those channels that are empty. Thus, the threshold T_{analogue} is preferably set to be a certain value above that of the minimum background noise power. A value of 10 has been found to work well, so that in our example T_{analogue} should be set to 20. This avoids channels being erroneously flagged as containing a signal as a result of excessive background noise.

In step S120 a further check is carried out on the signal read from the digital AGC in step S30 of Figure 4. In this step if the value of the number from the digital AGC is greater than the pre-determined threshold, the input signal is decided to be too weak to be decoded. Control flows to step S65 and the channel is flagged so that it is ignored later.

Step S110 and also step S120 are optional steps and one or both of them can in appropriate circumstances be omitted. However, where as here they are both present, then providing the signal passes both checks against the threshold values, control passes to step S130. This is the first of three steps in which the type of the signal is determined, that is whether it is an analogue or digital signal.

The power spectrums of an analogue signal and of a digital signal are very different, and by checking the power of the signal at different positions in the spectrum the analogue and digital signals can be distinguished from each other.

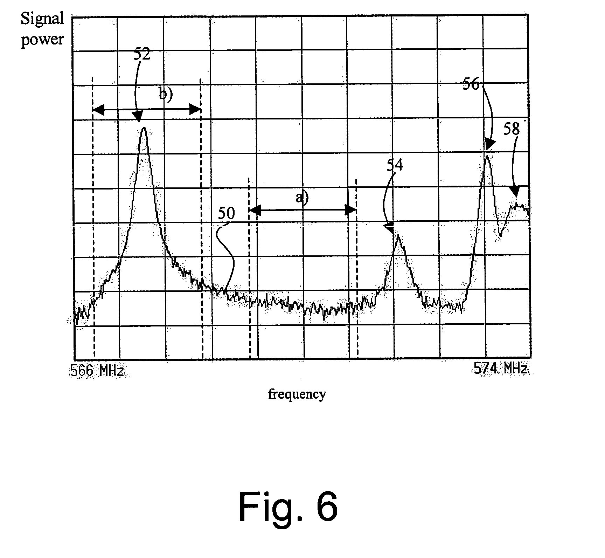

Figure 6 is a graph showing the power spectrum of a typical analogue signal 50 within a channel. The spectrum has three peaks, which from left to right represent the video carrier signal 52, the colour subcarrier signal 54 and the analogue audio signal respectively 56. The plateau 58 to the right of the analogue audio peak represents the signal for NICAM stereo. The horizontal scale is about 0.8MHz per graduation, while that on the vertical axis is about 10dB per graduation.

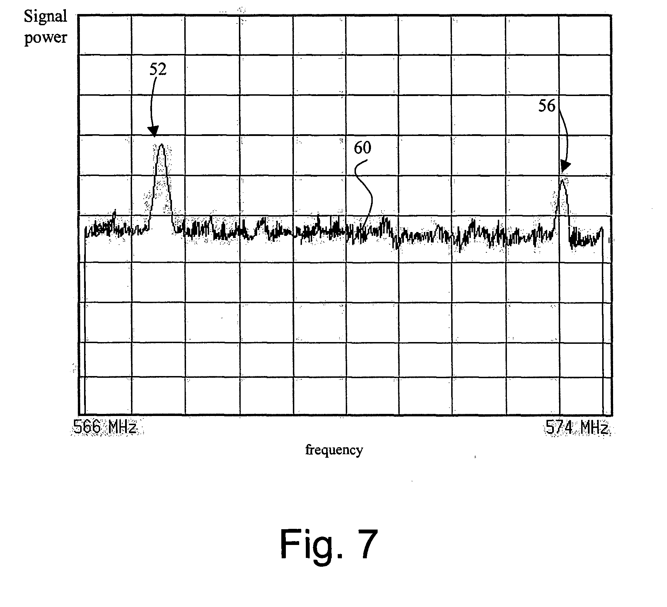

Figure 7 illustrates a spectrum for a channel containing co-channel analogue 50 and digital signals 60. Co-channel signals are the result of two different transmitters transmitting an analogue and a digital signal on the same channel frequencies. A relatively high level of digital signal is present here for the purposes of illustration. Given the ratio of the analogue signal power to the digital signal power, the vision carrier peak 52 and the audio carrier peak 56 can just be seen.

The analogue part of the spectrum is difficult to extract given the presence of the larger, flatter digital signal 60, and tends to act merely as unwanted background noise. Even if the analogue signal could be extracted sufficiently well for it to be viewed, it would produce a noisy picture. The digital signal is more robust, and can be extracted from the shared channel providing the analogue signal is not too strong. Provided there is no multipath distortion, which would tend to cause frequency selectivity, the digital signal is substantially flat. All this will be discussed in more detail later.

In particular, it should be noted that the power spectrum for the digital signal shown in Figure 7 is a different shape from that of the analogue spectrum. It is a substantially flat spectrum. This fact is used by the preferred receiver to determine the type of signal present in the channel.

In the preferred embodiment of the receiver, the band-pass range of the digital filter 20 is adjusted during step S30 (Figure 4) so that it is considerably narrower than the whole COFDM channel. The frequency shift of the frequency shifter 16 can be set as desired to hold its value constant so that it is not affected by the post-FFT measurement of the frequency error.

A width in the range 1 to 3 MHz has been found to be suitable, and a band-pass range of 2MHz is preferred. The filter pass band is centred in the middle of the frequency band for the channel. A reading of the power value for this region of the spectrum, shown as region a) in Figure 6, is taken in step S30 from the digital AGC for each channel. The preferred system then operates the frequency shifter 16, to change the frequency of the received signal so that the part of the received signal that is usually 2.5MHz below the centre of the channel now lies in the middle of the band-pass filter. This means that the peak of the analogue signal 50 that corresponds to the video carrier 52 is now not removed by the digital filter. This region is illustrated in Figure 6 as region b). A reading of the power value indicated by the digital AGC is recorded for region b) for each channel. As explained earlier, it is preferred if the values for regions a) and b) are determined for each channel before moving onto the next, to avoid time being wasted re-tuning to the frequency of each new channel.

In step S130 of Figure 5, the preferred receiver examines the value taken from the digital AGC with the digital filter positioned so that the pass-band section of the filter is centred in the received channel (region a)). This value of power can be called PC_{digital} say, that is the centred digital AGC power level. If the power of this part of the signal is above the pre-determined threshold T_{digital}, then control passes to step S140 where the power level read for region b) of the signal is examined. If this value, PL_{digital}, for the power of the lower region, is also greater than the threshold set for the digital AGC, T_{digital}, then both PC_{digital} ≥T_{digital} and PL_{digital} ≥ T_{digital}, then it is likely that the signal detected is leakage from an adjacent channel. Thus, the channel is set to be disregarded in step S65.

If either of the two power levels read from the digital AGC are below the threshold, then control passes to step S150. In this step the algorithm calculates the ratio of the centred AGC power value to the AGC power value taken from the lower end of the spectrum. If the ratio of PC_{digital} / PL_{digital} is above a pre-determined value then it can be deduced that the channel contains an analogue signal. The value of the ratio for a digital signal is quite low with a value typically of between 1 to 2. The threshold is therefore set to a value of above 2, and usually less than 6. The preferred value is 4, so that if the centred digital AGC power level is greater than or equal to four times the low digital AGC power level, then the signal is most likely to be an analogue television signal. This can be understood from the magnitudes of the analogue signal graph shown in Figure 6.

The channel is therefore disregarded as it either does not contain a digital signal, or contains a digital signal of too low a power to be decoded. Control passes to step S65 and the channel is flagged to be disregarded.

If the signal is neither identified as an analogue signal or as a signal that has leaked from an adjacent channel, then it can be assumed with reasonable confidence that the signal is a COFDM digital television signal with sufficient power for successful demodulation. At this point, control passes to step S160 on Figure 5 where the algorithm exits. Control then returns to step S90 of Figure 4. The operation of the preferred receiver then continues with the parallel search algorithm to determine the number of carriers (2K or 8K) and the size of the guard interval fraction. This is illustrated as step S170 in Figure 8 and will be described in detail later.

As noted above, in the procedure set out in Figure 5, steps S110 and S120 can be optional steps. In alternative embodiments, the determination of whether the digital signal is strong enough to be decoded may be achieved by means of steps S130 and S140. As an alternative to these steps, the parallel search algorithm described below can be run on every channel. This typically takes two seconds to scan the entire band, but it is still a relatively fast search algorithm.

If a channel containing an analogue television signal or a signal that has a received signal power that is too low to be successfully demodulated is not disregarded by the above sequence, then the parallel search routine to be described next, and which takes approximately 40ms to execute, will be called unnecessarily for that channel. The signal would be rejected by this search routine and 40ms of time has been wasted. It is therefore preferred to use all the steps of Figure 4.

An alternative though less preferred approach to detect analogue television signals is to use the correlator 26. The correlator 26 correlates the received signal across an active symbol period of the digital signal. The duration of the active symbol depends on the mode of transmission of the signal and is typically 224µs, in the case of 2K mode DVB-T transmission, and 896µs in the 8K mode of DVB-T transmission. In the normal operation of the receiver, the correlation is used as part of the pre-FFT time synchronisation and FFT start circuitry.

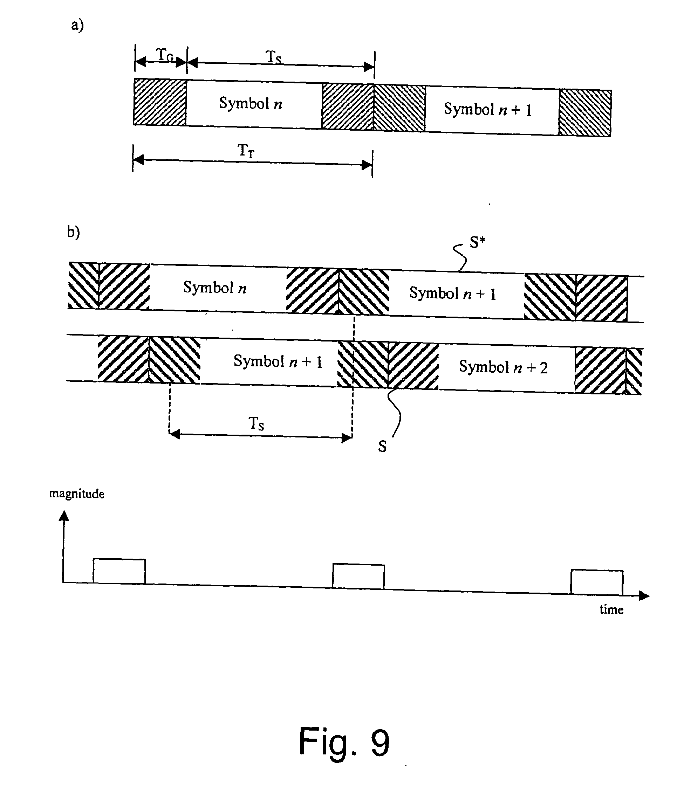

A typical input signal to the correlator is shown in Figure 9a). The signal comprises a number of frames of length T_{T}. Each frame comprises a section of useful signal T_{S}, called the active symbol period, and a guard interval of duration T_{G}. The guard interval is generated by copying the last part of the useful signal in the frame and attaching it to the beginning of the section containing the useful signal. This duplication of the final part of the useful signal, and the resulting separation in the time domain between successive useful signal sections provides protection against multipath interference once the signals are decoded into the frequency domain.

The correlator operates by multiplying the received signal S by a delayed, complex conjugate version of itself S*. This is illustrated in Figure 9b). The delay is precisely calculated such that the part of the signal at the end of the frame in one signal is exactly aligned in the time domain with the guard interval in the same frame in the complex conjugate signal. Since the end of the active symbol period and the guard interval are identical in content within a frame, the complex conjugate product of these two signals is a non-zero value. At all other points in the correlated signal, the mean is zero. The resulting output is therefore a signal with periodic pulses representing the total period of the frame. This can be seen from Figure 9c). It will be realised that the delay is necessary otherwise every point in the product will be non-zero.

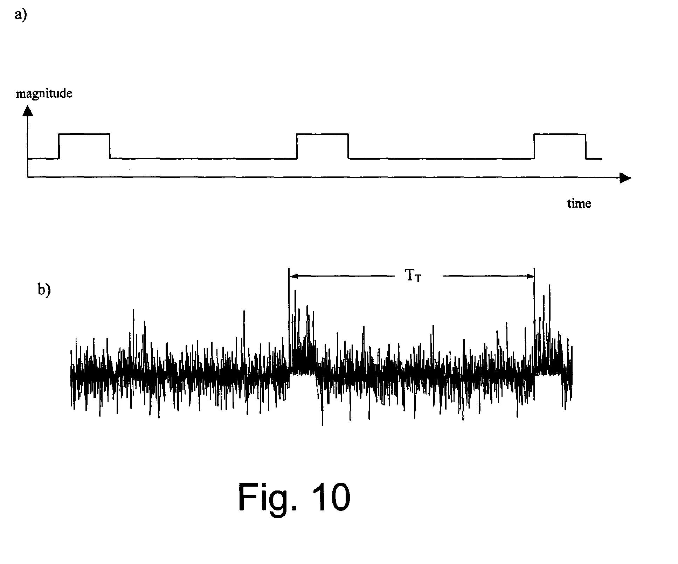

At the output of this correlator, if there is any CW (continuous wave) or CW-like signals (such as an analogue television signal) present, this appears as a DC bias at the output of the correlator. This is shown in Figure 10a). The actual output of the correlator is shown by way of example in Figure 10b).

As part of the normal operation of a receiver, the output of the correlator is put through a high pass filter to remove the DC bias. In the preferred embodiment the "measure DC component" circuit 28 is operable to measure the amount of the DC bias that is being removed. The amount of the DC bias that is being removed indicates how much DC bias is present at the input, which gives an indication of how much CW, or analogue television signal, is present at the input.

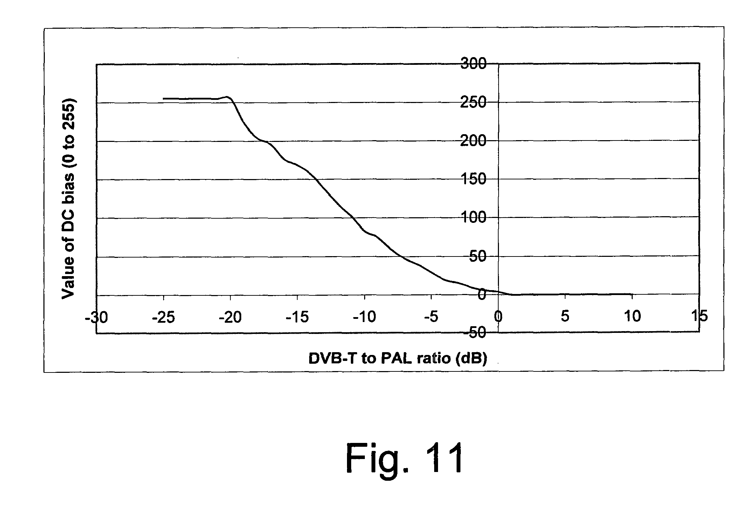

Figure 11 shows how the DC bias measurement varies with different amounts of co-channel PAL, that is analogue television signal, in the same channel. It can be seen that the DC bias increases with increasing analogue signal. The DC bias is measured on a scale of 0 to 255 with a value of 255 indicating a high DC bias. Thus, by reference to a pre-determined threshold, it can be decided whether a DC bias value indicates the presence of an analogue or CW wave or not.

In practice, this approach has proved less successful than the technique previously. There are three main drawbacks with this technique.

The first drawback is that there is a lot of variation on the amount of DC bias between successive examinations of the DC bias. It is preferred therefore if the DC bias is examined several times successively, for example 50 times, the maximum value then being taken as the DC bias value for the purposes of the evaluation. If this value is greater than the pre-determined threshold then it is likely that there is an analogue television signal present. Reading the value 50 times does however take time.

The second drawback is that if there is no DVB-T digital component present at all (the only signal present is an analogue television signal), there is a large variation in the level of DC bias. For transmission in the UK, the digital signal of a co-channel signal with a DVB-T to analogue ratio of -4dB or less will typically be swamped by the analogue signal and will be difficult to extract. In transmission systems used in some other countries the ratio of digital signal to analogue signal, at which the digital signal is too low to be successfully decoded can range upwards from about -12dB. The exact figures are at least partly dependent on the type of QAM transmission employed. In the UK, the region of interest of the graph shown in Figure 11 is therefore approximately from -4dB upwards. In this region, the amount of DC bias present is actually quite small. The large variation in the level of the received CW signal makes it difficult to set an appropriate threshold.

The third drawback is that the amount of DC bias as indicated by the COFDM receiver is small. For example, a DVB-T to PAL ratio of 0dB returns a value of only 4 (out of 255). This also makes it hard to set an appropriate threshold.

Once it has been established that there is a COFDM signal present in the channel of interest, and that it is of sufficient power to be decoded and is not an analogue television signal, it is necessary to determine the FFT size (2048 or 8192) and the guard interval fraction (1/32, 1/16, 1/8 or 1/4). Referring to Figure 9, the guard interval fraction will be understood as the fraction of the active symbol period that is copied from the end of the active symbol period and reproduced at the beginning to form the guard interval.

Control passes from step S90 shown in Figure 4, to step S170 of Figure 8, and the processing steps which are specific to the properties of digital signals are then commenced. There are eight possible combinations of FFT size and guard interval fraction, and existing mode detection algorithms try each one in turn. This makes the existing search algorithm slow. In accordance with an aspect of this invention it is proposed to try at least two of the possibilities in parallel. Preferably, all eight of the possibilities are tried in parallel as this gives the optimum saving of time. The preferred embodiment of the invention provides an algorithm that returns the FFT size and guard interval fraction in approximately 40ms. It also indicates if there was no match, in which case, it can be concluded that the signal under examination was not a DVB-T signal. The hardware to achieve this lies in the correlator 26 and in the parallel search circuits 30 of Figure 2.

As noted above, a correlator 26 is present as part of the hardware for the normal operation of the COFDM receiver, as part of the pre-FFT time synchronisation and FFT-start position circuitry. In normal operation, the correlator correlates the received signal across an active symbol period, 224µs in 2K mode and 896µs in 8K mode. Normally, the correlator output is subsampled to help reduce memory in the receiver. In the present implementation, the correlator is subsampled by a factor of 2 in 2K mode and 8 in 8K mode.

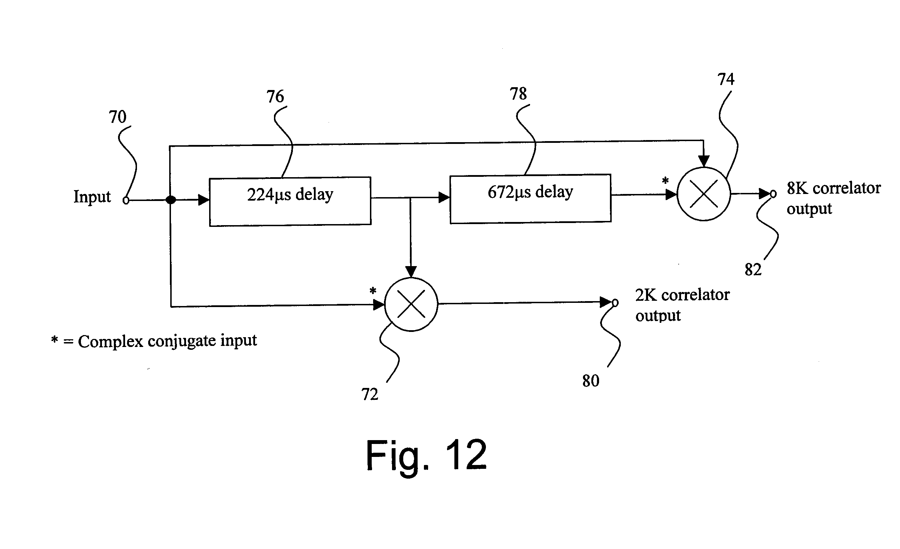

In order to implement the parallel search algorithm, the preferred embodiment employs a correlator which presents two outputs in parallel. This is illustrated in Figure 12. The signal to the correlator is received at input 70. The signal is split and passed to first and second multipliers 72 and 74 respectively. The signal passed to the first multiplier is the complex conjugate S* of the received signal S, whereas the signal passed to the second multiplier 74 is the signal S. The signal is also passed from the input 70 to the 224µs delay block 76. This block introduces the necessary delay to detect 2K transmission modes. The output from the 224µs delay block contains 256 complex samples (the full signal output from the correlator contains 2048) of subsampled memory and is passed to the first multiplier 72 and also to the 672µs delay block 78. This second delay block introduces the further delay (in addition to the 224µs delay) necessary to detect 8K transmission modes. The complex conjugate of the output from the 672µs delay block is passed to the second multiplier 74. The multipliers take the complex product of the original signal received at the input 70 with the delayed signal received from the 224µs delay block 76 or the 672µs delay block 78 respectively and pass this to outputs 80 and 82 to give two correlator output signals. These signals are presented in parallel to the inputs of the parallel search circuit 30. Four of the parallel search circuits receive the signal from output 80 and four of the parallel search circuits receive the signal from the output 82.

The two correlator outputs are now presented in parallel. The first output is a correlation across 224µs of delay which corresponds to 2048 complex samples in a full memory implementation, but is subsampled 8-to-1 and so uses only 256 complex samples of delay. The second output is a correlation across a total of 8192 complex samples in a full memory implementation but is subsampled 8-to-1 and so uses only 1024 complex samples of delay (which is only 768 complex samples in additional to the 256 complex samples required to implement the first output). Clearly other memory arrangements and other subsampling factors are possible here.

The correlation across 224µs and the correlation across 896µs therefore take place at the same time. As the memory is subsampled by a factor of 8 in 8K, the two outputs will be subsampled by a factor of 8, which means that the 2K output in this special mode will be subsampled by more than in the normal 2K mode.

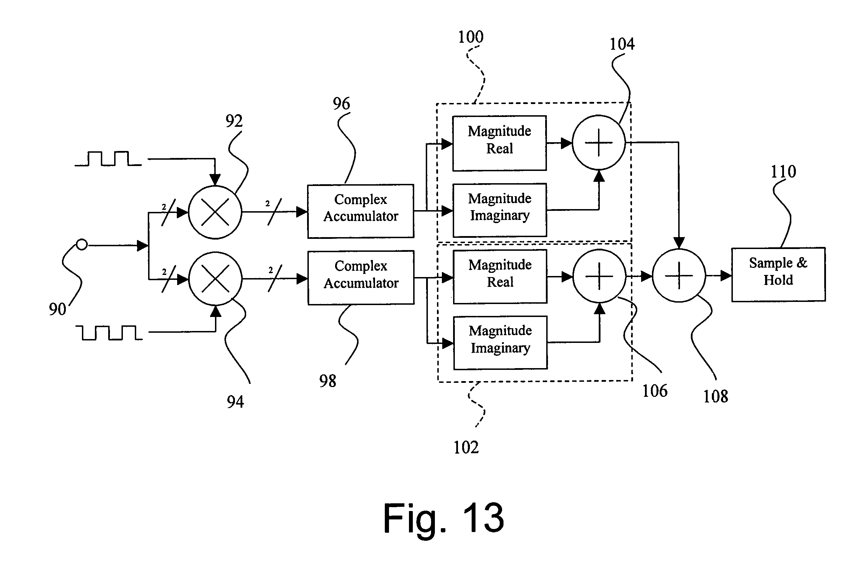

Figure 13 shows a single parallel search circuit used in one of the blocks. There are eight of these in total in the preferred embodiment; one is provided for each of the possibilities of guard interval and FFT size combinations making up the frame length in a transmission mode.

The operation of one of the individual parallel search units will now be described in detail. A FFT size of 2K and a guard interval fraction of 1/32 will be assumed as an example.

Because this search circuit is a 2K search circuit, the correlator output from the first multiplier 72, which has been correlated across 224µs or 2048 complex samples is used. Because of the reduced memory implementation in the correlator, only every eighth complex sample is used in the correlation; that is the value of every eighth complex sample is used to replace the value of the next seven samples which follow, preserving the same width in time as the original correlator output signal.

The search circuit in this example is searching for an FFT size of 2K and guard interval fraction of 1/32. This means that there are 2112 complex samples in one COFDM symbol in this mode (2048 + 2048/32). However, in the preferred implementation each successive eighth sample is repeated to fill the 7 samples in between thus, there are only 2112/8 = 264 distinct samples complex samples in this total COFDM signal. It would also be possible to repeat each sample once (rather than eight times) and accompany the signal with a suitable control signal so that the correct synchronisation is maintained. However, repeating the signal 8 times means that, if a full memory version of the correlator is available, then it will not be necessary to makes changes to the parallel search circuit.

The output of the correlator is received at the input 90 and is passed to two multipliers 92 and 94, which take the product of the correlator signal with one of two square waves. The square waves shown have a 50% duty cycle with a period of 2112 samples (this value is mode dependent): the two levels of the square wave are +1 and -1. The two square waves are identical except that one is out of phase with the other by 90 degrees.

The outputs from the multipliers are then passed to two respective complex accumulators 96 and 98. Complex accumulators are used as the real-imaginary phase of the correlator output is unknown. These accumulate every complex sample. Because of the reduced memory implementation in the preferred correlator, these accumulate the same value eight times. The accumulators are only reset at the start of each new search, so that the value on the accumulator is retained from one COFDM symbol to the next.

The outputs from the two accumulators are then passed to two respective blocks 100 and 102 for determining the magnitude of the output signal. In order to save hardware resources, the blocks comprise adders 104 and 106 which calculate (magnitude(real) + magnitude(imaginary)). Other approximate (or exact) magnitude calculations are possible, for example the larger of the real and imaginary components plus a proportion of the smaller.

The results from the two adders are then added together in adder 108 and passed to a sampler 110. The sampler samples the sum of sums once every 2112 samples (the value 2112 is mode dependent). Once a certain number of COFDM symbols (or time) has been accumulated, the sample and hold block is used to sample the total value and provide the output from the parallel search circuit. There are 8 search units in total and the largest value of the 8 search units at the end of the search period indicates the current mode of transmission.

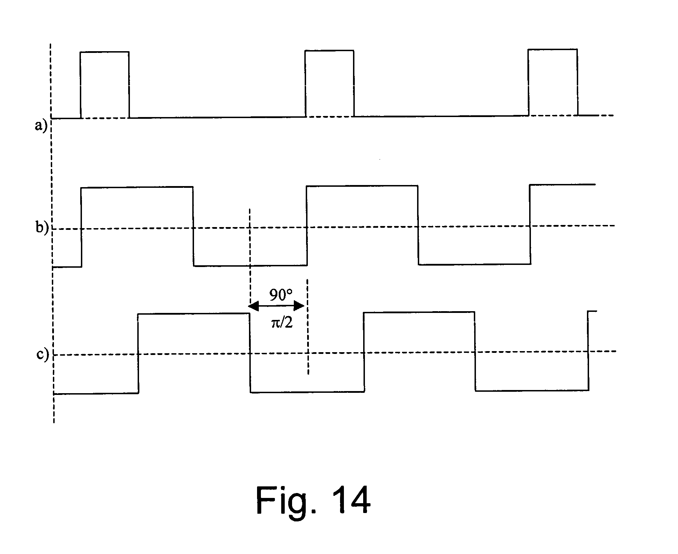

The operation of the parallel search circuit will now be described in detail and with reference to Figure 14. The system detects the transmission mode of the received digital signal by searching for a frequency component at the total symbol duration (2112 samples in this mode). The square waves shown as b) and c) in Figure 14 have a period that is equal to the symbol period T_{T} of the transmission mode to be detected. If the period of the correlator pulses is the same as that of the square wave then the pulses from the correlator, shown as a) in Figure 14 will always substantially coincide with either the positive or the negative pulses of one or the other of the square waves. The result of the multiplication with the at least one of the square waves will consist of a product signal in which the pulses of the correlator are substantially unaltered or entirely inverted.

When this product signal is summed by the accumulator over successive frames, the pulses are summed constructively leading to a sum total that is increasing, on average, in magnitude with time, whether the sum is positive or negative.

The frequency of the pulses received from the correlator are dependent on the length of the active symbol and on the length of the guard interval of the received signal. If the frequency of the square waves does not match that of the correlator signal, as will occur when the wrong transmission mode is being searched for, it will be understood that the correlator pulses will not always coincide with the same polarity of pulses in the square wave. If the frequencies are close, then the correlator pulses will begin in coincidence with square wave pulses of one polarity, say the positive pulses for example. However, as the phase difference becomes more and more apparent over time, the pulses will start to coincide with the negative pulses, and as more time passes, will eventually return to an alignment with the positive pulses. The effect of the difference in phase or frequency will therefore result in some of the correlator pulses in the product being inverted and some being passed unaltered. Assuming that there is roughly the same number of inverted and non-inverted correlator pulses, the total of the sum on the accumulator will be zero. In practice however, there is some accumulation, but the sum on the accumulator does not grow in magnitude as when all of the pulses have the same polarity. This case only occurs when the search frequency chosen for the square waves matches that of the received signal.

Two square waves b) and c) are employed, separated by 90 degrees, as the exact initial phase of the pulses from the correlator is not known. If the correlator pulses are initially aligned with the transition in the first square wave from positive to negative (or the reverse transition), for example, roughly half of the correlator pulses would be inverted and the other half would be passed unaltered even though the frequencies of the signals matched. The sum of the complex samples in the passed signal received by the accumulator would not therefore add up constructively for this square wave. The second square wave ensures that the correlator pulses of the matching signal always fall for the most part entirely within a pulse, be it positive or negative. If there was only one accumulator it would be possible for certain phases of the correlator output (with respect to the square wave) to cause no accumulation of values.

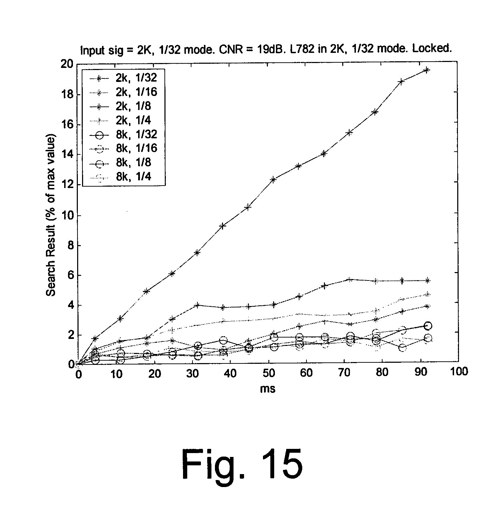

If the trial mode is correct, then the correlator will give a pulse every 2112 samples (in this example), approximately 64 samples in duration (assuming no multipath interference). As explained, this will tend to cause the accumulated values to rise. If the trial mode is not correct, then the correlator output will seem noise-like to this circuit and there will be no build up of accumulated values. Figure 15 shows how the accumulator content varies with time when the transmitted mode is 2K 1/32 and the signal has a carrier to noise ratio of 19dB. It can be seen that the accumulator associated with the parallel search unit looking for 2K 1/32 grows much more rapidly than the other 7 parallel search units.

Table 1 below shows the duration of the square wave, measured in number of samples, required in the parallel search unit. For example, the mode 2K 1/32 requires the square wave to have a period of 2112 complex samples.

**Table 1**

| | | | |
|---|---|---|---|
| 2K 1/32 | 2112 | 8K 1/32 | 8448 |
| 2K 1/16 | 2176 | 8K 1/16 | 4352 |
| 2K 1/8 | 2304 | 8K 1/8 | 9216 |
| 2K 1/4 | 2560 | 8K 1/4 | 10240 |

The operation of the search circuits described detects the first harmonic of the correlator output. It is possible to detect other harmonics by scaling the frequency of the square waves accordingly. This is in fact necessary to distinguish the 2K mode with a guard interval of 1/16, from the 8K mode having a guard interval of 1/16.

The table shows that the values for the 8K modes are usually four times those for the 2K modes. However the mode 8K 1/16 is a special case. In this mode, it is not possible to detect the first harmonic. Instead the parallel search unit must detect the second harmonic. Using the first harmonic causes a false match with the mode 2K 1/16. The second harmonic is searched for by doubling the frequency of the square waves for that mode.

The amount of time taken to determine the mode for the channel depends on the channel itself. If the channel is clean (i.e. no noise, multipath or other interference), then the parallel search block can provide the result more quickly than if the channel is impaired. In practice, it is preferred if the sums are calculated for a fixed amount of time. 40ms has been found to be enough time to achieve a reliable result in practice. This means that the parallel search phase of the scanning process would take 1.96 seconds to scan all 49 channels. At the end of the 40ms, the transmission mode is identified from the parallel search circuit producing the highest sum total. Preferably, a threshold is set which the sum must be in excess of in order for it to be considered a positive result. If there is no clear match and all eight parallel search circuits return roughly the same sum total, it will still be possible to identify the maximum of these and assume that a transmission mode has been detected. This will occur for example if the channel contains only an analogue signal that has not been successfully identified prior to the search stage. A threshold allows analogue signals or spurious signals to be rejected at the searching stage.

Alternatively, the determination can be made when a condition is fulfilled, such as when one of the parallel search units gives a result that is at least twice as big as any of the others say. In this case, it has been found necessary to wait at least 10ms from the start of the calculation to allow for start up effects to dissipate.

While the parallel search is taking place it is important that the frequency of the incoming signal is not allowed to change. In the normal operation of the receiver, the frequency shifter 16 makes adjustments to the frequency of the incoming signal in order to try and lock to the incoming signal. In the preferred receiver this function is "stalled" so that the frequency is constant.

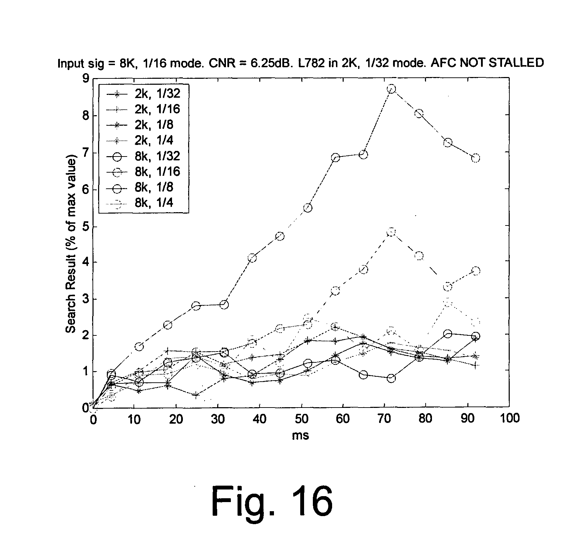

Figure 16 illustrates the effect of not stalling the frequency shifter. The parallel search block has, as a result of the shifting frequency, incorrectly detected the mode of transmission as 8K 1/8, when the correct mode is 8K 1/16.

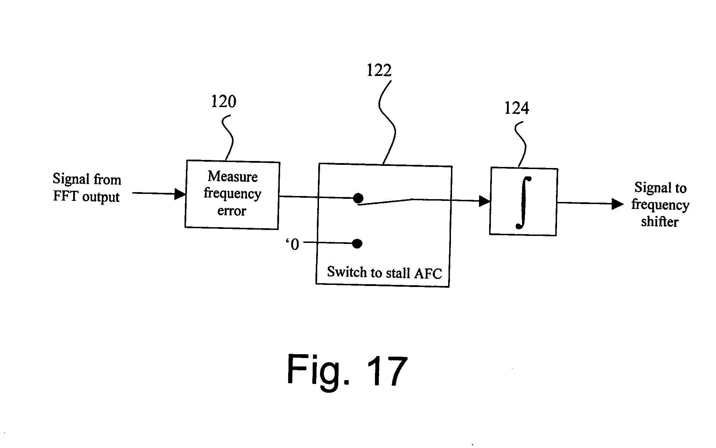

Figure 17 schematically shows part of a known AFC circuit, modified according to the preferred embodiment of the invention. The AFC operates in a similar way to the AGC described earlier.

The AFC receives an input signal from the FFT block 24, and measures in block 120 the frequency error between the received signal and the target frequency for that channel. The error signal from block 120 is passed to switch 122, and then to integrator 124. The output of the integrator 124 is passed back to the frequency shifter 16 where it is used to determine the amount of the frequency shift that needs to be applied to the received signal in order to lock the receiver to the signal.

In the preferred embodiment, the signal from the error block 120 can be switched out by switch 122. As a result, the signal fed back to the frequency shifter 16 is held constant, and the frequency shifter holds the frequency of the signal it outputs at a constant value.

Referring again to Figure 16, it can be seen that the search units are very sensitive to the quality of the signal they receive. This presents a danger that a high level digital signal in an adjacent channel to that being scanned could cause the wrong mode to be detected if it is not completely removed by filtering in the tuner. Imperfect filtering is a problem, and occasionally a high level signal in one channel does affect the signal in the channel next to it.

In order to compensate for this, it is preferred if the width of the pass-band of the digital filter is reduced from its normal value during the scanning process. The reduced pass-band is used for scanning all of the channels. A pass band of 4MHz (in an 8 MHz channel), has been found preferable to reduce the possibility of the wrong mode being detected as a result of an adjacent channel digital signal. Pass bands of between about 1 and 7 MHz may be used.

At this stage, it is known whether there is a signal present in a channel, whether it is an analogue television signal and, if it is a digital signal, what is the value of the FFT size and guard interval fraction. Referring again to Figure 8, control then passes from step S170 to S180.

The DVB-T specification allows the digital signal being transmitted to be offset from the centre of the channel by frequencies of -1/6 MHz, 0MHz or +1/6MHz in the UK. In other transmission systems, the offset allowed can be different. This is used to move the digital signal away from an analogue signal for example in an adjacent channel, which will usually have a greater power. It is therefore also necessary to detect this offset and to do so quickly.

In step S180, the preferred embodiment achieves this by examining the state of the Automatic Frequency Control (AFC) circuit and reading the value that the AFC has determined as the frequency offset from the present location. This is achieved by reading the value of the frequency error block 120. An alternative way of detecting the offset would be by reading the output value of the integrator (S124).

In practice, the AFC is implemented as a series of accumulators and the preferred receiver operates by determining which accumulator has the minimum value. A hardware algorithm is used which determines, for each COFDM symbol, which accumulator has the minimum value and what that value is. This is described in United Kingdom Patent Specification 2,325,129 and can readily be implemented by those skilled in the art. It is not therefore described here.

If the minimum accumulator value is found to indicate an offset of more than 1/12MHz from the current location, then a step change of 1/6MHz is applied to the frequency of the tuner and the values of the frequency accumulators are read again.

The preferred receiver further facilitates this frequency synchronisation process by reading which of the frequency accumulators has the minimum value, calculating an appropriate value for the frequency loop integrator 124 and loading the integrator directly with this value. The receiver is therefore quickly tuned to the incoming signal and control passes to step S190.

In step S190, having synchronised with the frequency, the receiver reads the TPS (Transmission Parameter Signalling) parameters from the received COFDM signal. These provide the constellation type (QPSK,16-QAM or 64-QAM), the code rate (½, 2/3, 3/4, 5/6 or 7/8) and the hierarchy constellation scale factor (none, 1, 2 or 4).

Once this information has been read, the receiver has complete information about the transmission mode. All of the parameters determined for the channel are then stored so that it is not necessary to scan for these parameters again the next time the channel is visited.

Control passes to step S200 in which the receiver examines the MPEG SI information contained in the signal to determine information about the program, such as the program name. The tuning process is then complete.

However, now that the transmission mode of the receiver is known, it is possible to tune some of the receiver parameters to improve reception. This is done in step S210. For example, the KI and KP scale factors of the various loops in the receiver (such as the time synchronisation loop) can be adjusted, and the metric offsets can be set to an appropriate value for the mode.

In advanced receivers, the metrics and filter loop bandwidths can also be adjusted dynamically to find the optimum value, using the bit error ratio of channel state information as a guide to the best receiver performance. Alternatively, the average channel state information value, or indeed any other suitable performance measure, can be used.

The preferred receiver optimises the reception of the signal at this stage by deciding what shape of filter function the digital filter 20 will use. If there is an analogue signal in the adjacent channel below the current digital channel, then it is possible that some of the NICAM sound carrier will cause interference to the edge carriers of the digital signal.

In step S220, the receiver determines whether filtering is required to remove the effects of an adjacent NICAM sound carrier. As a result of the determination, the digital filter is programmed with one of two sets of coefficients. In step S230 the digital filter 20 is programmed with a set of parameters that provide a normal bandwidth of 7.61MHz. Alternatively, in step S235, the digital filter is programmed with a set of coefficients that remove at least some of the NICAM sound carrier of the analogue signal in the adjacent channel from the present channel. The bandwidth provided by these coefficients may be slightly narrower than that used normally so that the frequencies at the bottom of the channel that are affected by the NICAM carrier are discarded. It also might provide a digital filter with a sharper response or cut off.

The preferred receiver determines which coefficients to use in one of two ways. The first method is to consider what signal is present in the lower adjacent channel and, if it is an analogue television channel program, the digital filter 20 uses the NICAM-rejecting set of coefficients.

The second method is to try both sets of coefficients in turn and record the value of the digital AGC with each in turn. If the value of the digital AGC indicates that there is significantly less signal power using the NICAM-rejecting coefficients, then this implies that there is NICAM present in the lower adjacent channel and the NICAM-rejecting coefficients should be used in normal operation. A difference of between 20 and 100 on the scale employed by the digital AGC is sufficient to demonstrate a significant power loss. In the preferred embodiment, the difference is set to be about 64.

There are various other methods of making this decision which will be known to those skilled in the art.

The digital receiver is now tuned to the channels containing a digital television signal, and the channel reception has been optimised. In step S240 the algorithm ends.

The preferred receiver takes a fraction of the time to scan all 49 channels used for television frequencies than known set-top digital receivers. To illustrate the difference, the following table breaks down the time taken for each part of the tuning process and provides a total time. In the example below, it is assumed that the parallel search process need be run only eight times say, as the other candidate channels have been disregarded by the earlier steps in the tuner process.

| | |
|---|---|
| Programming the tuner with the I²C sequence | 30ms |
| Time for the tuner to lock to each new channel | 2450ms |
| Running the parallel search 8 times | 320ms |
| Time for the receiver to lock on 7 channels | 700ms |
| | |
| Total time to scan all 49 channels is | 3500ms |

The preferred receiver is therefore capable of scanning all 49 channels and finding the transmission parameters for 6 digital channels in approximately 3.5 seconds, although some additional time will be required to read and analyse the MPEG SI tables from the signal. Also, any optimisation time that is required is not included in the above estimation.

It will be understood that the preferred digital receiver described can be used with any type of television signal encoding, including PAL, NTSC, and SECAM.

Although, the preferred embodiment has been described with reference to a digital broadcast television receiver, the techniques and apparatus described can also be implemented in digital radio systems, and mobile phone technology.

Many of the values for the thresholds used in the preferred embodiment to detect the nature of the channel contents can be inferred empirically from the values obtained during operation. For this reason, Table 2 which follows shows the values obtained from a number of transmitters in the United Kingdom, and illustrates the identification of both analogue and digital channels. The transmitters are at Crystal Palace, Hannington, Guildford, Midhurst and Sudbury, and the receiver is assumed to be at Bracknell. In this Table, the signal names have the following meanings:
ANA_AGC_PWRLVL - analogue AGC power level
DIG_AGC_PWRLVL_CENT - digital AGC power level at centre
DIG_AGC_PWRLVL_LOW - digital AGC power level at low level
CENT/LOW - ratio of DIG_AGC_PWRLVL_CENT to DIG_AGC_PWRLVL_LOW
Additionally where THRES is substituted for the final element of the expression, that indicates a threshold value.

The Table illustrates the use of the algorithm as follows:
1. ANA_AGC_THRES is set at 10 and DIG_AGC_THRES is set at 104.
2. If ANA_AGC_PWRLVL is less than or equal to ANA_AGC_THRES, then the signal is not strong enough. The procedure moves to the next channel.
3. Looking at the digital AGC signal, adjust the frequency of the frequency shifter so that the part of the received signal that is 2.5MHz below the centre of the channel is in the middle of the band-pass filter.
4. If both DIG_AGC_PWRLVL_CENT is greater than or equal to DIG_AGC_THRES and DIG_AGC_PWRLVL_LOW is greater than or equal to DIG_AGC_THRES, then it is likely that it is leakage from an adjacent channel. The procedure moves to the next channel.
5. If the ratio CENT/LOW is greater than or equal to 4, then the signal is most likely to be an analogue television signal. Again the procedure moves to the next channel.
6. The channels that are not eliminated by the above steps are highly likely to contain a COFDM digital television signal with sufficient power for successful demodulation. The parallel search algorithm can then be invoked for the remaining channels; in the case illustrated in Table 2, this is just eight channels, namely channels 21, 22, 25, 28, 29, 32, 34, and 46.

If an analogue television signal or a signal which has too little power to be successfully demodulated should fail to be eliminated, then the parallel search algorithm will be called unnecessarily. The signal will be rejected by the parallel search algorithm, and all this means is that 40ms of time has been wasted.

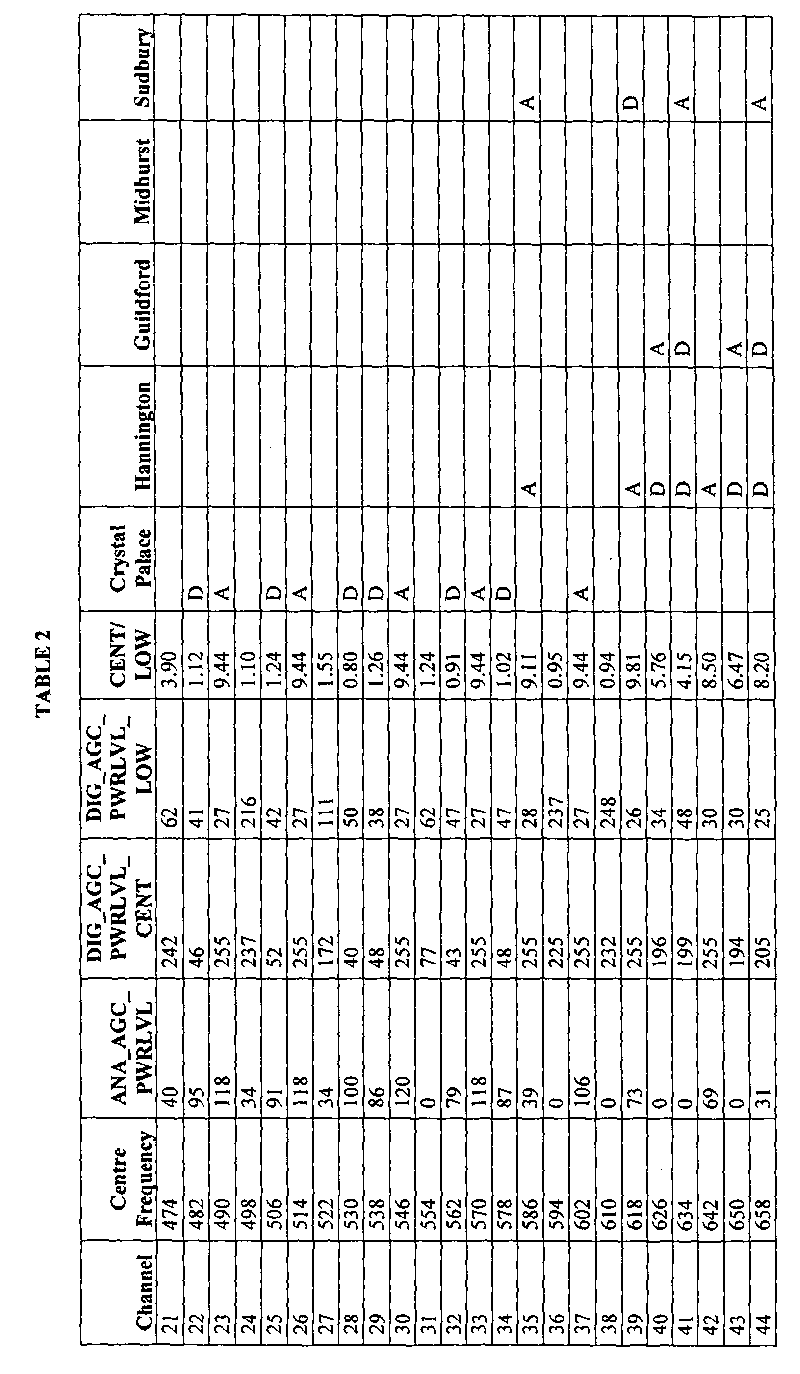

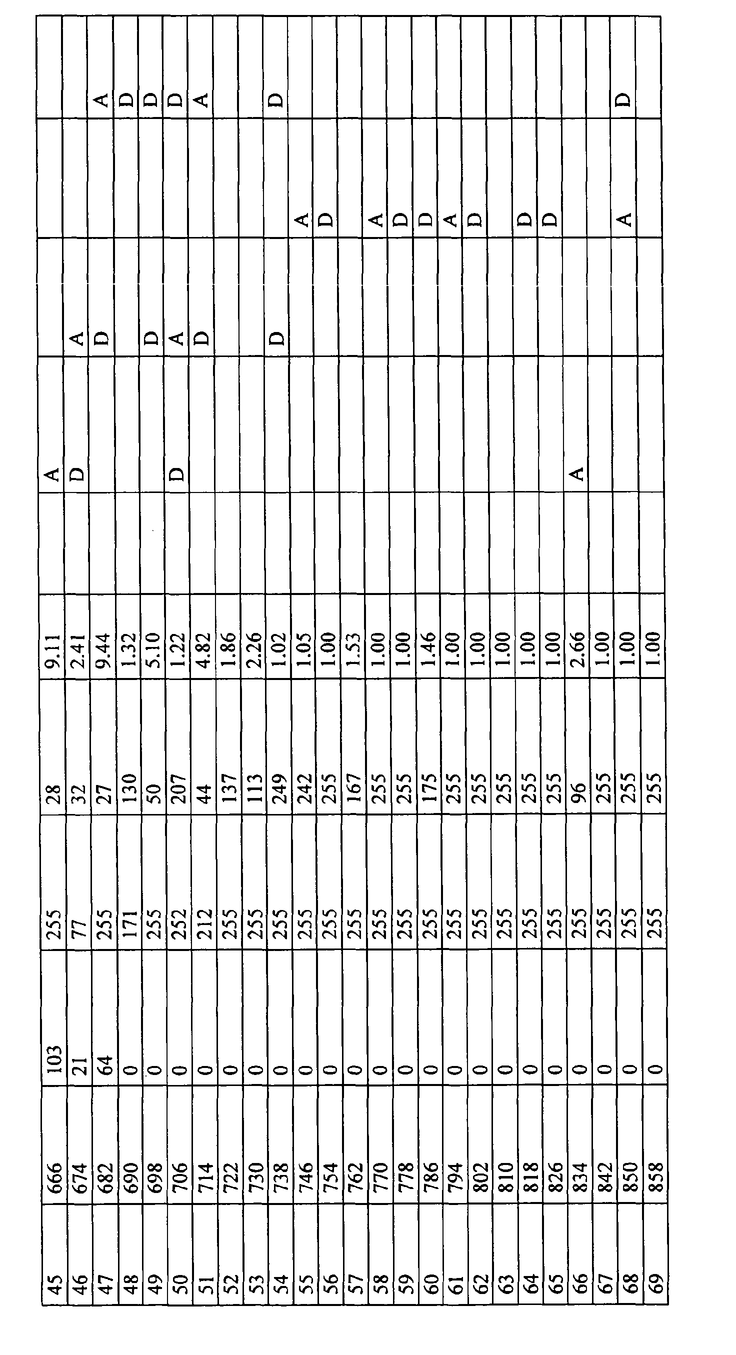

## Claims

1. An apparatus for determining the transmission mode of a received digital signal in a digital broadcast system, the received digital signal having a frame length characteristic of the transmission mode; the apparatus comprising:
an input for receiving a digital signal;
a correlator coupled to the input for correlating the received signal to produce an output correlated signal; and
a search circuit coupled to the correlator to receive the output correlated signal, the search circuit comparing the output correlated signal to a timing signal and giving an output in dependence on the difference in timing between the timing signal and the output correlated signal,
wherein the search circuit searches for two or more of the possible digital transmission modes in parallel.

2. The apparatus of claim 1 wherein the search circuit searches simulataneously for all of the possible digital transmission modes in parallel.

3. The apparatus of claim 1 or 2, wherein the search circuit comprises individual search circuits dedicated to each possible transmission mode, resulting from combinations of active symbol period and guard interval.

4. The apparatus of claim 3 wherein the correlator comprises:
a correlator input for receiving the received digital signal;
at least first and second multipliers coupled to the correlator input;
first delay means coupled to the correlator input, for delaying the received digital signal by a first delay amount;
second delay means, coupled to the correlator input or to the first delay means, for delaying the received digital signal by a second delay amount; wherein,
the first multiplier receives signals from the correlator input and the first delay means, correlates one signal with the other, and provides an output to a first correlator output;
and the second multiplier receives signals from the correlator input and the second delay means, correlates one signal with the other, and provides an output to a second correlator output.

5. The apparatus of claim 4, wherein at least one individual search circuit is connected to the first correlator output, and at least one individual search circuit is connected to the second correlator output.

6. The apparatus of claim 3, 4 or 5, wherein each individual search circuit comprises:
first and second multipliers for combining the output correlated signal with first and second timing signals, the first and second timing signals being out of phase with each other by 90°, and both being characteristic of a respective transmission mode;
first and second complex accummulators for accumulating the respective outputs from each of the multipliers;
first and second adders for determining the respective magnitudes of the signals output from the first and second accummulators; and
a third adder for adding the results of from the first and second adders and providing an output.

7. The apparatus according to claim 6 wherein the first and second adders are configured to calculate (magnitude (real) + magnitude(imaginary)) for each of the signals output from the first and second accummulators.

8. The apparatus of any preceding claim wherein the received signal is subsampled, such that every nth sample is retained, and wherein the samples between the nth sample and the n+1 th sample are replaced by the nth sample to preserve the width in time of the subsampled signal in comparison with the received signal.

9. The apparatus of any preceding claim wherein the timing signal is generated such that it has a period equal to N or 1/N times the frame length of a transmission mode, wherein N is an integer.

10. An apparatus for determining digital broadcast signal transmission mode information in a digital broadcast system, the apparatus comprising:
an input for receiving a broadcast signal;
a tuner, coupled to the input, for selecting a signal channel in a plurality of signal channels;
analysing means, coupled to the tuner, for determining one or more characteristics of the signal received in the selected channel, and for determining whether the channel appears to contain a receivable digital signal, such a channel being a candidate channel for digital signal decoding;
a search circuit, coupled to the analysing means, for determining the digital transmission mode information of a digital signal, wherein the search circuit operates to determine the digital transmission mode information of the signal in the selected channel, only if the analysing means determines that the channel is a candidate channel.

11. An apparatus according to claim 10 wherein the analysing means determine for each channel, in the plurality of signal channels, whether it is a candidate for digital signal decoding before the search circuit is operated.

12. An apparatus according to claim 10 or 11 wherein the analysing means is operable to determine from the one or more characteristics whether the channel contains a signal of sufficient magnitude to be digitally decoded, such that channels having signals of insufficient magnitude are not identified as candidates for digital decoding.

13. An apparatus according to any of claims 10, 11 or 12, wherein the analysing means is operable to determine from the one or more characteristics whether the channel contains an analogue signal, such that channels which are determined to contain an analogue signal are not identified as candidates for digital decoding.

14. An apparatus according to any of claims 10, 11 or 12, wherein the analysing means is operable to:
a) determine, as the one or more characteristics, the magnitude or power of the signal for at least two frequencies within the channel, and
b) determine, from the magnitude and power for the at least two frequencies, whether the channel contains an analogue signal, or where the channel contains co-channel analogue and digital signals, whether the analogue signal is of too great a magnitude for digital decoding to occur, and wherein such channels are not identified as candidates for digital decoding.

15. An apparatus according to any of claims 10 to 14, wherein the analysing means comprises an automatic gain control circuit for determining the analogue power or magnitude of a signal within a signal channel.

16. An apparatus according to any of claims 10 to 15, wherein the analysing means comprises a digital automatic gain circuit for determining the digital power or magnitude of a signal within a signal channel.

17. An apparatus according to claim 11 wherein the analysing means detects the magnitude or power of the signal in each of the signal channels to determine a minimum background noise level, and sets a threshold in relation to the minimum background noise level for use in determining whether a signal in a channel is of sufficient magnitude to be digitally decoded, such that channels having signals of insufficient magnitude are not identified as candidates for digital decoding.

18. An apparatus for identifying in a plurality of signal channels of a broadcast system, candidate signal channels containing signals to be decoded, the apparatus comprising:
an input for receiving a broadcast signal;
a tuner, coupled to the input, for selecting a signal channel in a plurality of signal channels;
analysing means, coupled to the tuner, for detecting the magnitude or power of the signal in each of the signal channels to determine a minimum background noise level, and for setting a threshold in relation to the minimum background noise level for use in determining whether a signal in a channel is of sufficient magnitude to be decoded;
wherein channels having a signal of sufficient magnitude are identified as candidate channels for supply to a search circuit which performs signal decoding.

19. An apparatus for determining whether a signal channel in a broadcast network contains an analogue or a digital signal, the apparatus comprising:
a signal input for receiving a signal from a signal channel;
analysing means, coupled to the input, for determining the magnitude or power of the signal over at least two different ranges of frequencies within the channel; and
means for comparing the at least two magnitudes or powers of the signal, and for determining whether the signal is an analogue signal or a digital signal in dependence on the result of the comparison.

20. An apparatus according to claim 19 wherein the analysing means comprise:
a digital filter having a bandwidth that is smaller than the width of the channel;
a level detection circuit, coupled to the output of the digital filter for detecting the magnitude or power of the signal frequencies transmitted by the filter;
a frequency shifter, coupled to the input of the digital filter, for respectively shifting the frequency of the signal received from the signal channel such that the at least two different ranges of frequencies are each allowed to pass through the digital filter in turn;
wherein, the level detection circuit detects the magnitude or power of the signal in each frequency range.

21. An apparatus according to claim 20 wherein the level detection circuit is a digital AGC circuit.

22. An apparatus according to claim 19 or 20, wherein the first range of frequencies fall in the centre of the channel, and the second range of frequencies fall across that part of the signal that, if it were an analogue signal, would contain the vision carrier.

23. An apparatus for determining whether a signal channel in a broadcast network contains an analogue signal, the apparatus comprising:
a signal input for receiving a signal from a signal channel;
a correlator coupled to the input for correlating the received signal to produce an output correlated signal;
a dc detection means for determining the dc offset of the output correlated signal in comparison to a reference value;
threshold detection means for comparing the dc offset with a threshold value to determine whether an analogue signal is present.

24. An apparatus for dynamically controlling a filter for processing a received digital broadcast signal, the broadcast signal being transmitted in one of a plurality of broadcast channels;
determining the magnitude or power value using a filter of a first width and having a filter edge near the edge of the channel;
determining the magnitude or power value using a filter of a second width and having a filter edge further from the edge of the channel, the second width being smaller than the first;
determining the sharpness of the filter response, or the range of the filter, in dependence on a comparison of the magnitude or power values obtained for the first and second filter widths.

25. An apparatus for tuning to a digital broadcast signal having a frequency offset within a digital broadcast channel, the frequency offset having values that are an integer multiple of a minimum offset value; the apparatus comprising:
an input for receiving a digital broadcast signal;
automatic frequency control means, coupled to the input, for determining the frequency error between the received signal and a preferred frequency, and for determining if the frequency error is greater than half the minimum value for frequency offset,
a frequency shifter;
wherein if the frequency error is greater than half the minimum value for frequency offset the frequency shifter is operable to shift the frequency by an amount equal to the minimum value; and when the frequency error is less than half the minimum value for the frequency offset, the frequency error is integrated and applied to the frequency shifter to shift the frequency of the received signal.

26. A digital broadcast receiver comprising the apparatus of any of claims 1, 10, 18, 19 or 24.
